# EUROPÄISCHE PATENTSCHRIFT

(11) **EP 2 755 838 B1**
(45) Veröffentlichungstag und Bekanntmachung des Hinweises auf die Patenterteilung: **18.01.2017**
(21) Anmeldenummer: 12759005.7
(22) Anmeldetag: 25.08.2012
(51) Int. Cl.: B60K 1/04, H01M 2/10, H01M 10/04, F16B 21/16

(54) **ANORDNUNG ZUM BEFESTIGEN EINES ENERGIESPEICHERMODULS AUF EINEM MODULTRÄGER**
ARRANGEMENT FOR SECURING AN ENERGY STORAGE MODULE ON A MODULE SUPPORT
AGENCEMENT POUR LA FIXATION D'UN MODULE ACCUMULATEUR D'ÉNERGIE SUR UN SUPPORT DE MODULE

(30) Priorität: 13.09.2011 DE 102011082576
(43) Veröffentlichungstag der Anmeldung: 23.07.2014
(73) Patentinhaber: Bayerische Motoren Werke Aktiengesellschaft, 80809 München (DE)
(72) Erfinder: GOESMANN, Hubertus, 89564 Nattheim-Auernheim (DE)
(86) Internationale Anmeldenummer: PCT/EP2012/003592
(87) Internationale Veröffentlichungsnummer: WO 2013/037455

(56) Entgegenhaltungen:
- EP-A1- 0 508 248
- EP-A1- 1 939 956
- EP-A2- 2 374 646
- DE-A1-102007 007 956
- JP-A- H09 274 906
- US-A1- 2010 167 115

## Beschreibung

Vorliegende Erfindung betrifft Anordnungen zur Befestigung eines Energiespeichermoduls auf einem Modulträger, insbesondere einer Fahrzeugkarosserie.

In einer üblicherweise als Batterie bezeichneten Vorrichtung zur Spannungsversorgung eines Kraftfahrzeugs kommt meist eine Mehrzahl an Energiespeichermodulen zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten prismatischen Speicherzellen. Die einzelnen Speicherzellen enthalten elektrochemische Zellen der Batterie. Der Stapel auf den einzelnen Speicherzellen wird zumeist über eine mechanische Endplatte (auch Druckplatte genannt) und Zuganker zu dem Energiespeichermodul verspannt. Die Endplatten und Zuganker dienen neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken.

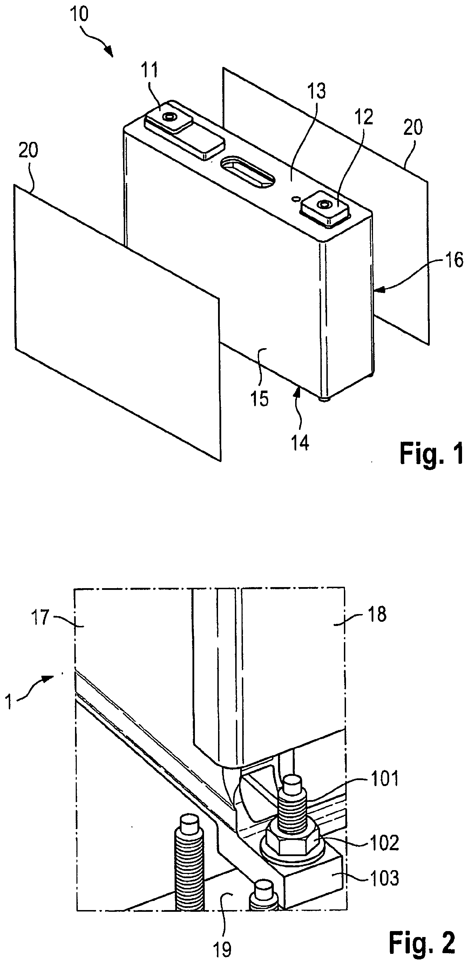

Die Energiespeichermodule werden in Vorrichtungen zur Spannungsversorgung, insbesondere in Kraftfahrzeugen, montiert. Dies geschieht üblicherweise mit einem Befestigungsmittel, beispielsweise einem Bolzen bzw. einer Schraube. Zur Verbindung zwischen Bolzen und Energiespeichermodul sind bisher Fortsätze am Energiespeichermodul vorgesehen. Durch diese Fortsätze wird das Befestigungsmittel gesteckt und kann somit beispielsweise im Kraftfahrzeug verschraubt werden. Diese Fortsätze ragen über das Energiespeichermodul hinaus und erhöhen somit in ungünstiger Weise den Bauraum des Energiespeichermoduls. Ferner ist diese Befestigungsmethode mit Bolzen und Muttern aufwändig in der Montage. Figur 2 zeigt eine nicht erfindungsgemäße Verschraubung eines Energiespeichermoduls 1 auf einem Modulträger 19. Wie hier dargestellt ist, ragt bei dieser herkömmlichen Methode ein Fortsatz 103 über die Endplatte 17 des Energiespeichermoduls 1 hinaus. In diesem Fortsatz 103 steckt ein Bolzen 101 als Befestigungsmittel. Dieser Bolzen 101 ist mittels der Verschraubung 102 fixiert. Darüber hinaus ist aus der nachveröffentlichten EP 2 374 646 A2 eine Anordnung bekannt, bei der ein Energiespeichermodul mittels eines Kugelsperrbolzens auf einem Modulträger befestigt wird. Ferner ist die Verwendung von Rastvorrichtungen für das Haltern von in einem Fahrzeug angeordneten Batterien bekannt. Aus der EP 0 508 248 A1, die den nächstliegenden Stand der Technik für den unabhängigen Anspruch 9 bildet, ist eine Vorrichtung bekannt, bei der eine Starterbatterie mittels einer Rastvorrichtung in einem Batteriegehäuse gehalten wird. Hierzu ist an einer Seitenwand des Batteriegehäuses eine Federzunge angeordnet. Die Federzunge weist einen kürzeren Schenkel auf, der dann, wenn die Starterbatterie in dem Batteriegehäuse angeordnet ist, zur Erzeugung einer Haltewirkung auf eine Stützfläche drückt, die eine am Bodenbereich der Starterbatterie befindliche Sockelleiste aufweist. Die JP H09 274906 A beschäftigt sich damit, bei einer in einem Fahrzeug verbauten Batterie sicherzustellen, dass nach einem Unfall der Batterie kein großer Strom mehr entnommen werden kann. Die einzelnen Batteriezellen sind in einem Batteriegehäuse beweglich gelagert. Durch die bei einem Unfall wirkende Beschleunigung werden die Batteriezellen innerhalb des Batteriegehäuses auseinander bewegt, wodurch die zwischen den einzelnen Batteriezellen bestehenden Kontaktierungen unterbrochen werden. Bei einer Ausführungsform werden die einzelnen Batteriezellen in den dabei eingenommenen Positionen innerhalb des Batteriegehäuses mittels Rastvorrichtungen gesichert.

Aus der EP 1 939 956 A1 ist eine Anordnung nach dem Oberbegriff des unabhängigen Anspruchs 1 bekannt, und aus der DE 10 2007 007 956 A1 ist eine Anordnung nach dem Oberbegriff des unabhängigen Anspruchs 4 bekannt.

Es ist Aufgabe vorliegender Erfindung, eine Anordnung zur Befestigung eines Energiespeichermoduls auf einem Modulträger anzugeben, die auf einfache Weise herstellbar und montierbar ist und bei möglichst kleinem Bauraum eine einfache und sichere Befestigung ermöglicht.

Die Aufgabe wird gelöst durch die jeweiligen Merkmalskombinationen der unabhängigen Ansprüche. Die abhängigen Ansprüche zeigen jeweils vorteilhafte Ausgestaltungen der Erfindung.

Somit wird die Aufgabe gelöst durch eine Anordnung, umfassend ein Energiespeichermodul, einen Modulträger, insbesondere eine Fahrzeugkarosserie, und einen zum Befestigen des Energiespeichermoduls auf dem Modulträger ausgebildeten Kugelsperrbolzen, wobei ein erstes Ende des Kugelsperrbolzens fest mit dem Modulträger verbunden ist. Auf das andere Ende des Kugelsperrbolzens wird das Energiespeichermodul aufgesteckt und mittels den Kugeln im Kugelsperrbolzen verriegelt. Alternativ dazu ist es auch möglich, dass das erste Ende des Kugelsperrbolzens fest mit dem Energiespeichermodul verbunden ist. Bei der Montage wird dann das Energiespeichermodul mit dem daran befestigten Kugelsperrbolzen in den Modulträger eingesteckt und der Modulträger wird mittels der Kugeln am Kugelsperrbolzen verriegelt. Erfindungsgemäß ist vorgesehen, dass auf dem Kugelsperrbolzen zwischen dem ersten (festen) Ende und den Kugeln eine Klemmhülse zur Kraftübertragung zwischen den Kugeln und dem aufgesteckten Bauteil angeordnet ist.

Bevorzugt umfasst das aufgesteckte Bauteil ein Durchgangsloch mit einem Absatz. Somit liegt dann die eine Stirnseite der Klemmhülse an den Kugeln an und die andere Stirnseite der Klemmhülse liegt auf dem Absatz auf.

Der Kugelsperrbolzen umfasst bevorzugt mehrere Kugeln am Umfang des Kugelsperrbolzens und einen Entriegelungsstift im Inneren des Kugelsperrbolzens. Der Entriegelungsstift ist dabei bevorzugt derart federbelastet, dass er die Kugeln nach außen drückt. Dadurch stehen die Kugeln etwas über den Umfang des Kugelsperrbolzens hinaus und infolge dessen kann zwischen den Kugeln und dem festen Ende des Kugelsperrbolzens das aufgesteckte Bauteil, nämlich das Energiespeichermodul bzw. der Modulträger, eingeklemmt werden.

In besonders bevorzugter Ausführung ist vorgesehen, dass die Klemmhülse an der den Kugeln zugewandten Stirnseite einen trichterförmigen Klemmkonus als Auflagefläche für die Kugeln aufweist. Dadurch ist ein spielfreies Klemmen zwischen der Klemmhülse und den Kugeln gewährleistet.

Des Weiteren ist bevorzugt vorgesehen, dass die Klemmhülse zumindest eine Tellerfeder und/oder zumindest ein elastisches Element zum Spielausgleich in Axialrichtung umfasst. Als Axialrichtung ist hier die axiale Erstreckung des Kugelsperrbolzens bzw. der Durchgangslöcher im Energiespeichermodul oder im Modulträger zu verstehen.

Die Erfindung umfasst des Weiteren eine Anordnung mit einem Energiespeichermodul, einem Modulträger, insbesondere einer Fahrzeugkarosserie, und einer zum Befestigen des Energiespeichermoduls auf dem Modulträger ausgebildeten Klemmvorrichtung, wobei die Klemmvorrichtung einen Klemmbolzen und eine durch den Klemmbolzen aufgeweitete Klemmhülse umfasst.

In bevorzugter Ausführung ist dabei vorgesehen, dass ein erstes Ende des Klemmbolzens in den Modulträger eingeschraubt ist und auf das andere Ende des Klemmbolzens das Energiespeichermodul aufsteckbar und mittels Aufweiten der Klemmhülse verklemmbar ist. In einer alternativen Variante ist das erste Ende des Klemmbolzens in das Energiespeichermodul eingeschraubt und auf das andere Ende des Klemmbolzens wird der Modulträger aufgesteckt und mittels Aufweiten der Klemmhülse verklemmt. Zum Einschrauben des Klemmbolzens ist insbesondere eine Einschraubhülse im Modulträger bzw. im Energiespeichermodul vorgesehen.

In bevorzugter Ausführung ist vorgesehen, dass die Klemmhülse auf dem Klemmbolzen zwischen dem ersten (festen) Ende und einem Klemmbolzenkopf zur Kraftübertragung zwischen dem Klemmbolzenkopf und dem aufgesteckten Bauteil, nämlich dem Energiespeichermodul oder dem Modulträger, angeordnet ist. Die Klemmhülse sitzt dabei manschettenartig um den Klemmbolzen. Das feste Ende des Klemmbolzens wird in den Modulträger bzw. das Energiespeichermodul eingeschraubt. Das jeweils andere Bauteil hat keinen direkten Kontakt zum Klemmbolzen, sondern steht lediglich mit der Klemmhülse in Kontakt. Durch Einschrauben des Klemmbolzens wird die Klemmhülse aufgeweitet und ermöglicht somit das Klemmen des zu befestigenden Bauteils am Klemmbolzen.

Bei dieser Befestigung mittels Klemmbolzen und Klemmhülse ist bevorzugt das Durchgangsloch im aufgesteckten Bauteil mit einem einheitlichen Durchmesser ausgeführt. Hier sind keine Absätze im Durchgangsloch notwendig. Das Durchgangsloch hat den einheitlichen Durchmesser der Klemmhülse bzw. ist nur unwesentlich größer als die Klemmhülse.

In weiterer bevorzugter Ausbildung ist vorgesehen, dass die dem Klemmbolzenkopf zugewandte Stirnseite der Klemmhülse einen trichterförmigen Klemmkonus aufweist, wobei ein Außenkonus am Klemmbolzenkopf flächig auf dem Klemmkonus aufliegt und so die Klemmhülse beim Einschrauben des Bolzens aufweitet. Durch dieses flächige Aufliegen des trichterförmigen Klemmkonusses am Klemmbolzenkopf ist ein sicheres Aufweiten der Klemmhülse und eine sichere Kraftübertragung vom Klemmbolzenkopf auf die Klemmhülse gewährleistet.

Des Weiteren ist bevorzugt vorgesehen, dass die Klemmhülse einen Schlitz in Axialrichtung aufweist. Dadurch lässt sich die Klemmhülse gut aufweiten.

Des Weiteren ist erfindungsgemäß eine Anordnung mit einem Energiespeichermodul, bestehend aus mehreren Speicherzellen, die zwischen Endplatten über Zuganker verspannt sind, wobei die Endplatten jeweils einen Hohlraum aufweisen, einem Modulträger, insbesondere einer Fahrzeugkarosserie, und einer zum Befestigen des Energiespeichermoduls auf dem Modulträger ausgebildeten Rastvorrichtung vorgesehen. Die Rastvorrichtung umfasst dabei eine Halterung mit mehreren hintereinander angeordneten Rastnasen und eine hinter eine der Rastnasen eingerastete Rastzunge. Ferner ist vorgesehen, dass ein erstes Ende der Halterung fest mit dem Modulträger verbunden ist und auf das andere Ende der Halterung das Energiespeichermodul dergestalt aufsteckbar ist, dass die Halterung in den Hohlraum der Endplatte hineinragt und mittels Rastnase und Rastzunge ver- und entriegelbar ist. In dieser ersten Variante ist die Rastzunge am Energiespeichermodul befestigt.

Die Rastnase ist hier bevorzugt als Raststeg ausgebildet und stellt somit eine ausreichende Fläche dar, hinter die die Rastzunge einrasten kann. Dadurch dass die Halterung mehrere, hintereinander angeordnete Rastnasen umfasst, können Fertigungstoleranzen ausgeglichen werden, da die Rastzunge in die jeweils passende Rastnase einrastet.

Alternativ kann vorgesehen sein, dass das erste Ende der Halterung fest mit dem Energiespeichermodul verbunden ist und auf das andere Ende der Halterung der Modulträger aufsteckbar und mittels Rastnase und Rastzunge ver- und entriegelbar ist. In dieser zweiten Variante ist die Halterung am Energiespeichermodul befestigt, wohingegen die Rastzunge am Modulträger befestigt ist.

In vorteilhafter Ausführung ist vorgesehen, dass die Rastzunge für ein selbständiges Einrasten hinter der Rastnase federnd ausgebildet ist und/oder federbelastet ist. Dadurch müssen bei der Montage die Bauteile nur zusammengesteckt werden und das Einrasten erfolgt von selbst.

Des Weiteren ist bevorzugt vorgesehen, dass die Halterung mehrere parallel angeordnete Rastnasen umfasst.

Insbesondere ist die Rastzunge am Energiespeichermodul bzw. am Modulträger über eine Drehachse drehbar gelagert. Dadurch kann die Rastzunge auf der einen Seite der Drehachse an der Halterung einrasten. Auf der anderen Seite der Drehachse befindet sich bevorzugt ein Lösehebel. Durch Anziehen bzw. Drücken dieses Lösehebels rastet die Rastzunge wieder aus der Halterung aus und das Energiespeichermodul ist demontierbar. Bevorzugt ist in dem Hohlraum der Endplatte die Rastzunge befestigt.

Alle drei erfindungsgemäßen Anordnungen haben gemein, dass sie anstatt der herkömmlichen Verschraubung eine klemmende Verbindung zwischen Energiespeichermodul und Modulträger vorsehen.

Im Folgenden werden noch vorteilhafte Ausbildungen beschrieben, wie sie bei den beiden erfindungsgemäßen Anordnungen, bei denen die Befestigung mittels Kugelsperrbolzen und Klemmvorrichtung erfolgt, bevorzugt zum Einsatz kommen: Das Energiespeichermodul ist insbesondere eine Vorrichtung zur Spannungsversorgung, bestehend aus mehreren Speicherzellen, die zwischen zwei Endplatten über Zuganker verspannt sind. Besonders bevorzugt erfolgt die Befestigung zwischen Energiespeichermodul und Modulträger über diese Endplatten. Hierzu weisen die Endplatten für die Befestigung mittels Kugelsperrbolzen oder Klemmvorrichtung bevorzugt Durchgangslöcher auf. In diese Durchgangslöcher in den Endplatten ragen dann die Kugelklemmbolzen bzw. die Klemmbolzen und die Klemmhülsen hinein.

Besonders bevorzugt wird ein Energiespeichermodul mit zwei, insbesondere vier, der oben genannten Anordnungen, genauer gesagt Kugelsperrbolzen, Klemmvorrichtungen oder Rastvorrichtungen am Modulträger befestigt. Dabei können die oben genannten verschiedenen Befestigungsanordnungen auch kombiniert werden.

Darüber hinaus ist bevorzugt ein Stapeln von Energiespeichermodulen übereinander vorgesehen. Hierzu gibt es zwei grundsätzliche Anordnungen: Bevorzugt wird das unterste Energiespeichermodul mittels einer der drei erfindungsgemäßen Anordnungen am Modulträger befestigt. Bezüglich des zweiten (auf das erste Energiespeichermodul aufgesetzten) Energiespeichermoduls ist das unten liegende Energiespeichermodul der "Modulträger". Das heißt, dass das oben liegende Energiespeichermodul mit einer der drei erfindungsgemäßen Anordnungen am unten liegenden Energiespeichermodul befestigt wird.

In einer alternativen Variante zur Befestigung von gestapelten Energiespeichermodulen ist vorgesehen, dass der Kugelsperrbolzen, der Klemmbolzen oder die Halterung so lang bzw. hoch ausgebildet sind, dass ein erstes Energiespeichermodul lediglich auf den Kugelsperrbolzen, den Klemmbolzen oder die Halterung aufsteckbar ist. Es wird dann ein weiteres Energiespeichermodul ebenfalls auf denselben Kugelsperrbolzen, den Klemmbolzen oder die Halterung aufgesteckt, wobei lediglich dieses weitere Energiespeichermodul mit dem Kugelsperrbolzen, dem Klemmbolzen oder der Halterung verriegelt, verklemmt bzw. verrastet wird.

Die Endplatten der Energiespeichermodule können dabei bevorzugt aus Druckguss, insbesondere Aluminiumdruckguss, Strangpressprofilen oder Blechen bestehen.

Im Folgenden wird die Erfindung anhand von drei Ausführungsbeispielen, gezeigt in den Figuren, genauer erläutert. Dabei zeigt:
- Figur 1: Speicherzellen des Energiespeichermoduls gemäß allen Ausführungsbeispielen,
- Figur 2: eine herkömmliche Befestigung eines Energiespeichermoduls an einem Modulträger gemäß dem Stand der Technik,
- Figur 3: ein erstes Ausführungsbeispiel der erfindungsgemäßen Anordnung,
- Figur 4: ein zweites Ausführungsbeispiel der erfindungsgemäßen Anordnung,
- Figur 5: ein drittes Ausführungsbeispiel der erfindungsgemäßen Anordnung,
- Figur 6: eine erfindungsgemäße Befestigung gestapelter Energiespeichermodule gemäß allen Ausführungsbeispielen, und
- Figur 7: eine weitere erfindungsgemäße Befestigung gestapelter Energiespeichermodule gemäß allen Ausführungsbeispielen.

Im Folgenden wird die Erfindung anhand der Figuren 1 und 3 bis 7 genauer erläutert. Figur 2 zeigt eine herkömmliche, nicht erfindungsgemäße Verschraubung eines Energiespeichermoduls 1 auf einem Modulträger 19.

In Figur 1 ist eine einzelne prismatische Speicherzelle 10 eines erfindungsgemäß verwendeten Energiespeichermoduls 1 in perspektivischer Darstellung zu sehen. Die Speicherzelle 10 besteht typischerweise aus einer oder mehreren einzelnen elektrochemischen Zellen, welche in der hier gewählten Darstellung im Inneren der Speicherzelle 10 im Verborgenen liegen. Auf der Vorderseite 13 weist die Speicherzelle 10 ein Anschlussterminal 11 erster Polarität und ein Anschlussterminal 12 zweiter Polarität auf. Auf der in der Figur 1 nicht dargestellten Rückseite 14 der Speicherzelle 10 sind keine Anschlussterminals vorgesehen. Eines der Anschlussterminals 11, 12, typischerweise der Pluspol der Speicherzelle 10, kann elektrisch mit einem Gehäuse der Speicherzelle 10 verbunden sein. Da in dem erfindungsgemäß verwendeten Energiespeichermodul 1 mehrere der Speicherzellen 10 zumindest in einer Reihe gestapelt hintereinander angeordnet werden, werden zumindest gegenüberliegende Hauptflächen 15, 16 mit einem elektrisch isolierenden Material versehen. In dem in Figur 1 dargestellten Beispiel wird eine Klebefolie 20 auf die Hauptflächen 15, 16 aufgebracht. Zur Herstellung des Energiespeichermoduls werden mehrere der Speicherzellen 10 hintereinander gestapelt. Dabei berühren sich die einzelnen Speicherzellen 10 an den Hauptflächen 15, 16. An der Hauptfläche 15 der ersten Speicherzelle 10 und der Hauptfläche 16 der letzten Speicherzelle 10 in der gestapelten Reihe befindet sich dann jeweils eine Endplatte 17 (auch Druckplatte genannt). Die beiden Endplatten 17 sind über Zuganker 18 miteinander verspannt.

Die im Folgenden dargestellten Verbindungsmöglichkeiten des Energiespeichermoduls mit einem Modulträger greifen bevorzugt an den Endplatten 17 der Energiespeichermodule 1 an.

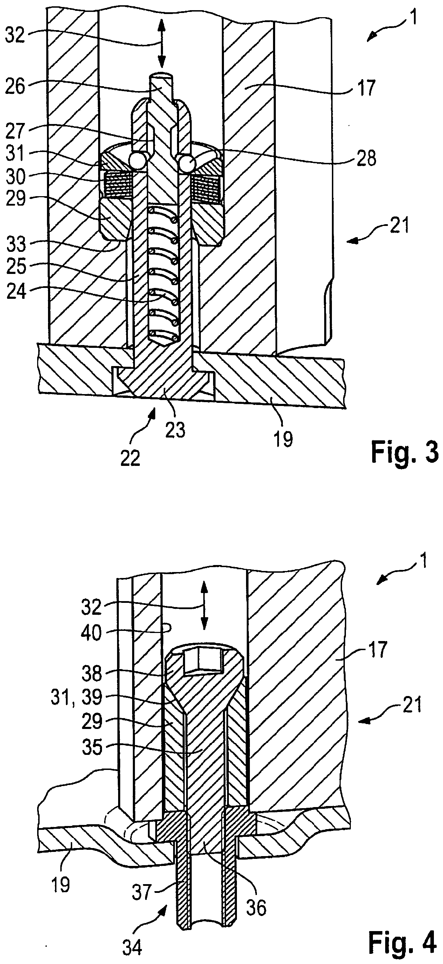

Figur 3 zeigt ein erstes Ausführungsbeispiel mit einer Anordnung 21 zur Befestigung des Energiespeichermoduls 1 auf dem Modulträger 19. Hierzu wird ein erstes Ende 23 eines Kugelsperrbolzens 22 fest mit dem Modulträger 19 verbunden. Die Endplatte 17 des Energiespeichermoduls 1 ist auf diesen Kugelsperrbolzen 22 aufgesteckt und mit ihm verriegelt.

Der Kugelsperrbolzen 22 umfasst ein Sperrbolzengehäuse 25. Am Umfang dieses Sperrbolzengehäuses 25 sind Aussparungen vorgesehen, in denen Kugeln 28 sitzen. Im Inneren des Sperrbolzengehäuses 25 befindet sich ein Hohlraum. In diesem Hohlraum ist ein Entriegelungsstift 26 angeordnet. Dieser Entriegelungsstift 26 weist eine Verjüngung 27 auf. Im verriegelten Zustand belastet eine Druckfeder 24, welche im Hohlraum des Sperrbolzengehäuses 25 angeordnet ist, den Entriegelungsstift derart, dass sich die Verjüngung 27 nicht auf Höhe der Kugeln 28 befindet. Dadurch drückt der Entriegelungsstift 26 die Kugeln 28 so weit nach außen, dass die Kugeln 28 etwas über den Umfang des Sperrbolzengehäuses 25 hinausstehen. Durch Drücken des Entriegelungsstiftes 26 gegen die Kraft der Druckfeder 24 wird die Verjüngung 27 auf Höhe der Kugeln 28 verschoben. Dadurch können die Kugeln 28 etwas nach innen ausweichen, wodurch die Kugeln 28 nicht mehr über den Umfang des Sperrbolzengehäuses 25 hinausstehen.

Unterhalb der Kugeln 28 steckt auf dem Kugelsperrbolzen 22 eine Klemmhülse 29. Die den Kugeln 28 zugewandte Stirnseite der Klemmhülse 29 weist einen trichterförmigen Klemmkonus 31 als Auflagefläche für die Kugeln 28 auf. Die gegenüberliegende Stirnseite der Klemmhülse 29 sitzt auf einem Absatz 33 in einer Durchgangsbohrung in der Endplatte 17 auf. Die Klemmhülse 29 umfasst des Weiteren zumindest eine Tellerfeder 30. Diese Tellerfeder 30 drückt die beiden Stirnseiten der Klemmhülse 29 etwas in der Axialrichtung 32 auseinander. Dadurch ist ein spielfreies Klemmen zwischen den Kugeln 28 und dem Absatz 33 möglich.

Die hier gezeigte Befestigungsvariante des Energiespeichermoduls 1 ist sehr schnell montiert, da das Energiespeichermodul 1 lediglich auf den Kugelsperrbolzen 22 (bzw. die mehreren Kugelsperrbolzen 22) aufgesteckt werden muss. Eine Demontage erfolgt durch Drücken des Entriegelungsstiftes 26.

Figur 4 zeigt ein zweites Ausführungsbeispiel der erfindungsgemäßen Anordnung 21. Hier erfolgt die Befestigung zwischen Energiespeichermodul 1 bzw. der Endplatte 17 des Energiespeichermoduls 1 und dem Modulträger 19 mittels einer Klemmvorrichtung 34. Die Klemmvorrichtung 34 umfasst einen Klemmbolzen 35, eine gegenüber dem ersten Ausführungsbeispiel veränderte Klemmhülse 29 sowie eine Einschraubhülse 37.

Die Einschraubhülse 37 befindet sich im Modulträger 19 und stellt ein Innengewinde für den Klemmbolzen 35 bereit. Der Klemmbolzen 35 weist an seinem ersten (festen) Ende 36 ein Außengewinde auf. Mit diesem Ende 36 wird der Klemmbolzen 35 in die Einschraubhülse 37 eingeschraubt. Am gegenüberliegenden Ende weist der Klemmbolzen 35 einen Klemmbolzenkopf 38 auf. Zwischen dem Klemmbolzenkopf 38 und dem festen Ende 36 befindet sich die Klemmhülse 29. Die Klemmhülse 29 ist hier als geschlitzte Hülse ausgebildet. Die Berührungsfläche zwischen Klemmbolzenkopf 38 und Klemmhülse 29 ist als Außenkonus 39 am Klemmbolzenkopf 38 und als trichterförmiger Klemmkonus 31 an der Klemmhülse 29 ausgebildet. Dadurch ist zum einen ein flächiges Anliegen des Klemmbolzenkopfes 38 an der Klemmhülse 39 gewährleistet und zum anderen kann durch Einschrauben des Klemmbolzens 35 die Klemmhülse 39 aufgeweitet werden.

Die Druckplatte 17 weist ein Durchgangsloch 40 auf. Dieses Durchgangsloch 40 hat einen durchgehenden, einheitlichen Durchmesser. Der Durchmesser des Durchgangslochs 40 entspricht in etwa dem Außendurchmesser der Klemmhülse 29. Dadurch kann schon vor dem Aufsetzen des Energiespeichermoduls 1 auf den Modulträger 19 der Klemmbolzen 35 inklusive der Klemmhülse 29 in den Modulträger 19 eingeschraubt sein. Bei der Montage wird dann das Energiespeichermodul 1 aufgesetzt und der Klemmbolzen 35 weiter in den Modulträger 19 bzw. die Einschraubhülse 37 eingeschraubt. Dadurch weitet sich die Klemmhülse 29 auf und klemmt das Energiespeichermodul 1 gegenüber dem Klemmbolzenkopf 38.

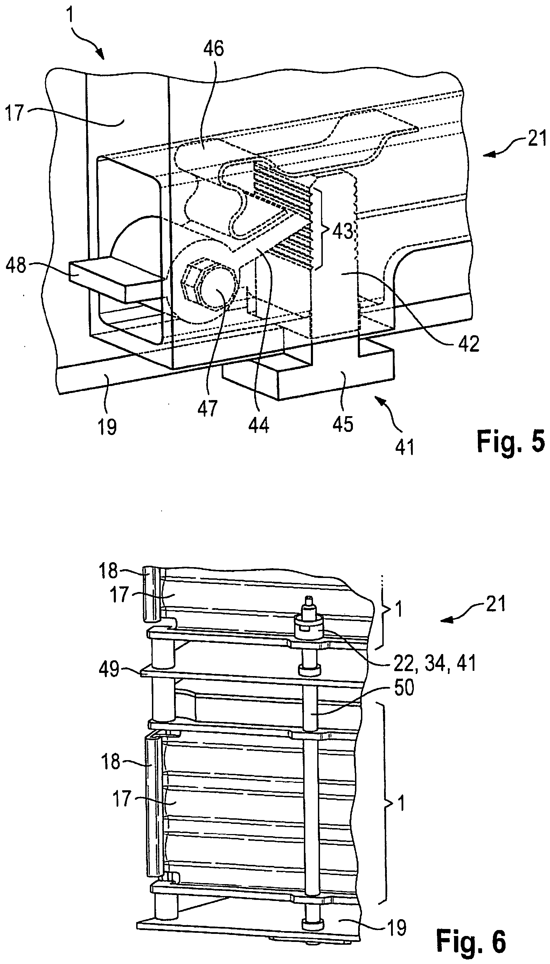

Figur 5 zeigt ein drittes Ausführungsbeispiel der erfindungsgemäßen Anordnung 21. Hier erfolgt die Befestigung zwischen Energiespeichermodul 1 bzw. der Endplatte 17 und dem Modulträger 19 mittels einer Rastvorrichtung 41.

Die Rastvorrichtung 41 umfasst eine Halterung 42 und eine Rastzunge 44. Die Halterung 42 ist mit einem ersten (festen) Ende 45 am Modulträger 19 befestigt. Die Halterung 42 ragt in die Endplatte 17 hinein und umfasst mehrere Rastnasen 43. Die Rastnasen 43 sind hier ausgebildet als Raststege, welche parallel übereinander angeordnet sind.

Im Inneren der Endplatte 17 ist die Rastzunge über eine Drehachse 47 mit dem Energiespeichermodul 1 verbunden. Auf der einen Seite der Drehachse 47 rastet die Rastzunge 44 hinter eine entsprechende Rastnase 43 ein. Auf der anderen Seite der Drehachse 47 befindet sich ein Lösehebel 48 der Rastzunge 44. Durch Drücken dieses Lösehebels 48 kann die Verbindung zwischen Rastzunge 44 und Halterung 42 wieder gelöst werden. Des Weiteren ist hier die Rastzunge 44 mittels der Andruckfeder 46 in Richtung des Modulträgers 19 federbelastet. Dadurch erfolgt ein automatisches Einrasten der Rastzunge 44 beim Aufstecken des Energiespeichermoduls 1 auf die Halterung 42.

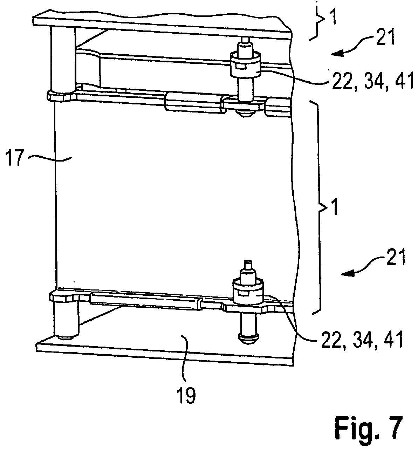

Die Figuren 6 und 7 zeigen zwei Möglichkeiten zur Befestigung gestapelter Energiespeichermodule 1 auf einem Modulträger 19. Hierbei können jeweils die Anordnungen 21 gemäß dem ersten, zweiten oder dritten Ausführungsbeispiel verwendet werden.

Figur 6 zeigt zwei übereinander gestapelte Energiespeichermodule 1. Zur Befestigung ist hier der Kugelsperrbolzen 22, der Klemmbolzen 35 oder die Halterung 42 fest mit dem Modulträger 19 verbunden und erstreckt sich nach oben. Auf den Kugelsperrbolzen 22, den Klemmbolzen 35 oder die Halterung 42 wird zunächst das untere Energiespeichermodul 1 aufgesteckt. Daraufhin wird eine Distanzhülse 50 und eine Zwischenplatte 49 aufgesteckt. Nach der Zwischenplatte 49 wird das zweite Energiespeichermodul 1 aufgesteckt. Lediglich dieses zweite Energiespeichermodul 1 ist dann mit dem Kugelsperrbolzen 22, dem Klemmbolzen 35 oder der Halterung 42 verriegelt, verklemmt bzw. verrastet.

Figur 7 zeigt eine zweite Variante zur Befestigung mehrerer, gestapelter Energiespeichermodule 1. Hier ist das untere Energiespeichermodul 1 wie in den beschriebenen Anordnungen 21 gemäß einem der drei Ausführungsbeispiele direkt am Modulträger 19 befestigt. Für das zweite, darüber liegende Energiespeichermodul 1 stellt das darunter liegende Energiespeichermodul 1 den "Modulträger" dar. Dies bedeutet, dass das oben liegende Energiespeichermodul 1 mittels einer der Anordnungen 21 gemäß einem der drei Ausführungsbeispiele direkt an dem darunter liegenden Energiespeichermodul 1 befestigt ist.

### Bezugszeichenliste:

- 1: Energiespeichermodul
- 10: Speicherzellen
- 11, 12: Anschlussterminal
- 13: Vorderseite
- 14: Rückseite
- 15, 16: Hauptflächen
- 17: Endplatten
- 18: Zuganker
- 19: Modulträger
- 20: Klebefolie
- 21: Anordnung
- 22: Kugelsperrbolzen
- 23: Erstes (festes) Ende des Kugelsperrbolzens
- 24: Druckfeder
- 25: Sperrbolzengehäuse
- 26: Entriegelungsstift
- 27: Verjüngung
- 28: Kugeln
- 29: Klemmhülse
- 30: Tellerfedern
- 31: Klemmkonus
- 32: Axialrichtung
- 33: Absatz
- 34: Klemmvorrichtung
- 35: Klemmbolzen
- 36: Erstes klammerfestes Klammerende des Klemmbolzens
- 37: Einschraubhülse
- 38: Klemmbolzenkopf
- 39: Klemmbolzenkopfaußenkonus
- 40: Durchgangsloch
- 41: Rastvorrichtung
- 42: Halterung
- 43: Rastnase
- 44: Rastzunge
- 45: Erstes klammerfestes Klammerende der Halterung
- 46: Andruckfeder
- 47: Drehachse
- 48: Lösehebel
- 49: Zwischenplatte
- 50: Distanzhülse
- 101: Schraube/Bolzen
- 102: Mutter
- 103: Fortsatz

## Patentansprüche

1. Anordnung (21) umfassend
- ein Energiespeichermodul (1), und
- einen Modulträger (19), insbesondere eine Fahrzeugkarosserie,
**gekennzeichnet durch**
- einen zum Befestigen des Energiespeichermoduls (1) auf dem Modulträger (19) ausgebildeten Kugelsperrbolzen (22), wobei ein erstes Ende (23) des Kugelsperrbolzens (22) fest mit dem Modulträger (19) verbunden ist und auf das andere Ende des Kugelsperrbolzens (22) das Energiespeichermodul (1) aufsteckbar und mittels Kugeln (28) am Umfang des Kugelsperrbolzens (22) ver- und entriegelbar ist, oder das erste Ende (23) des Kugelsperrbolzens (22) fest mit dem Energiespeichermodul (1) verbunden ist und auf das andere Ende des Kugelsperrbolzens (22) der Modulträger (19) aufsteckbar und mittels Kugeln (28) am Umfang des Kugelsperrbolzens (22) ver- und entriegelbar ist,
wobei auf dem Kugelsperrbolzen (22) zwischen dem ersten Ende (23) und den Kugeln (28) eine Klemmhülse (29) zur Kraftübertragung zwischen den Kugeln (28) und dem aufgesteckten Bauteil, nämlich dem Energiespeichermodul (1) oder dem Modulträger (19), angeordnet ist.

2. Anordnung nach Anspruch 1, **dadurch gekennzeichnet, dass** die Klemmhülse (29) an der den Kugeln (28) zugewandten Stirnseite einen trichterförmigen Klemmkonus (31) als Auflagefläche für die Kugeln (28) aufweist.

3. Anordnung nach einem der Ansprüche 1 oder 2, **dadurch gekennzeichnet, dass** die Klemmhülse (29) zumindest eine Tellerfeder (30) und/oder zumindest ein elastisches Element zum Spielausgleich in Axialrichtung (32) umfasst.

4. Anordnung, umfassend:
- ein Energiespeichermodul (1)
- einen Modulträger (19), insbesondere eine Fahrzeugkarosserie, und
- eine zum Befestigen des Energiespeichermoduls (1) auf dem Modulträger (19) ausgebildete Klemmvorrichtung (34),
- wobei die Klemmvorrichtung (34) einen Klemmbolzen (35) umfasst, **dadurch gekennzeichnet, dass** die Klemmvorrichtung (34) zudem eine durch den Klemmbolzen (35) aufgeweitete Klemmhülse (29) umfasst.

5. Anordnung nach Anspruch 4, **dadurch gekennzeichnet,**
- **dass** ein erstes Ende (36) des Klemmbolzens (35) in den Modulträger (19) eingeschraubt ist und auf das andere Ende des Klemmbolzens (35) das Energiespeichermodul (1) aufsteckbar und mittels Autweiten der Klemmhülse (29) verklemmbar ist, oder
- **dass** ein erstes Ende (36) des Klemmbolzens (35) in das Energiespeichermodul (1) eingeschraubt ist und auf das andere Ende des Klemmbolzens (35) der Modulträger (19) aufsteckbar und mittels Aufweiten der Klemmhülse (29) verklemmbar ist.

6. Anordnung nach Anspruch 5, **dadurch gekennzeichnet, dass** die Klemmhülse (29) auf dem Klemmbolzen (35) zwischen dem ersten Ende (36) und einem Klemmbolzenkopf (38) zur Kraftübertragung zwischen dem Klemmbolzenkopf (38) und dem aufgesteckten Bauteil, nämlich dem Energiespeichermodul (1) oder dem Modulträger (19), angeordnet ist.

7. Anordnung nach Anspruch 6, **dadurch gekennzeichnet, dass** die dem Klemmbolzenkopf (38) zugewandte Stirnseite der Klemmhülse (29) einen trichterförmigen Klemmkonus (31) aufweist, wobei ein Außenkonus (39) am Klemmbolzenkopf (38) flächig auf dem Klemmkonus (31) aufliegt und so die Klemmhülse (29) beim Einschrauben des Klemmbolzens (35) aufweitet.

8. Anordnung nach einem der Ansprüche 4 bis 7, **dadurch gekennzeichnet, dass** die Klemmhülse (29) einen Schlitz in Axialrichtung (32) aufweist.

9. Anordnung, umfassend:
- ein Energiespeichermodul (1), bestehend aus mehreren Speicherzellen (10), die zwischen zwei Endplatten (17) über Zuganker (18) verspannt sind, wobei die Endplatten (17) jeweils einen Hohlraum aufweisen,
- einen Modulträger (19), insbesondere eine Fahrzeugkarosserie, und
- eine zum Befestigen des Energiespeichermoduls (1) auf dem Modulträger (19) ausgebildete Rastvorrichtung (41),
- wobei die Rastvorrichtung (41) eine Halterung (42) mit mehreren hintereinander angeordneten Rastnasen (43) und eine hinter eine der Rastnasen (43) einrastende Rastzunge (44) umfasst, wobei ein erstes Ende (45) der Halterung (42) fest mit dem Modulträger (19) verbunden ist und auf das andere Ende der Halterung (42) das Energiespeichermodul (1) dergestalt aufsteckbar ist, dass die Halterung (42) in den Hohlraum der Endplatte (17) hineinragt und mittels Rastnase (43) und Rastzunge (44) ver- und entriegelbar.ist.

10. Anordnung nach Anspruch 9, **dadurch gekennzeichnet, dass** die Rastzunge (44) für ein selbständiges Einrasten hinter der Rastnase (43) federnd ausgebildet ist und/oder federbelastet ist.

11. Anordnung nach einem der Ansprüche 9 oder 10, **dadurch gekennzeichnet, dass** die Halterung (42) mehrere parallel angeordnete Rastnasen (43) umfasst.

12. Anordnung nach einem der Ansprüche 1 bis 8, **dadurch gekennzeichnet, dass** das Energiespeichermodul (1) eine Vorrichtung zur Spannungsversorgung, insbesondere eines Kraftfahrzeugs, ist, bestehend aus mehreren Speicherzellen (10), die zwischen zwei Endplatten (17) über Zuganker (18) verspannt sind.

## Claims

1. An arrangement (21) comprising
- an energy storage module (1) and
- a module carrier (19), especially a vehicle body,
**characterised by**
- a ball lock bolt (22) which is configured to fasten the energy storage module (1) to the module carrier (19), wherein a first end (23) of the ball lock bolt (22) is rigidly connected to the module carrier (19) and the energy storage module (1) can be attached to the other end of the ball lock bolt (22) and can be locked and unlocked by balls (28) on the circumference of the ball lock bolt (22), or
the first end (23) of the ball lock bolt (22) is rigidly connected to the energy storage module (1) and the module carrier (19) can be attached to the other end of the ball lock bolt (22) and can be locked and unlocked by balls (28) on the circumference of the ball lock bolt (22),
wherein arranged on the ball lock bolt (22) between the first end (23) and the balls (28) is a clamping sleeve (29) for transmitting force between the balls (28) and the attached component, namely the energy storage module (1) or the module carrier (19).

2. An arrangement according to claim 1, **characterised in that** the clamping sleeve (29) has on the end face towards the balls (28) a funnel-shaped clamping cone (31) as a support surface for the balls (28).

3. An arrangement according to either claim 1 or claim 2, **characterised in that** the clamping sleeve (29) comprises at least one plate spring (30) and/or at least one resilient element compensating play in the axial direction (32).

4. An arrangement, comprising
- an energy storage module (1)
- a module carrier (19), especially a vehicle body, and
- a clamping device (34) configured to fasten the energy storage module (1) to the module carrier (19),
- wherein the clamping device (34) comprises a clamping bolt (35), **characterised in that** the clamping device (34) also comprises a clamping sleeve (29) which is expanded by the clamping bolt (35).

5. An arrangement according to claim 4, **characterised in that**
- a first end (36) of the clamping bolt (35) is screwed into the module carrier (19) and the energy storage module (1) can be attached to the other end of the clamping bolt (35) and can be clamped thereon by expanding the clamping sleeve (29), or
- a first end (36) of the clamping bolt (35) is screwed into the energy storage module (1) and the module carrier (19) can be attached to the other end of the clamping bolt (35) and can be clamped thereon by expanding the clamping sleeve (29).

6. An arrangement according to claim 5, **characterised in that** the clamping sleeve (29) is arranged on the clamping bolt (35) between the first end (36) and a clamping bolt head (38) to transmit force between the clamping bolt head (38) and the attached component, namely the energy storage module (1) or the module carrier (19).

7. An arrangement according to claim 6, **characterised in that** the end face of the clamping sleeve (29) facing the clamping bolt head (38) has a funnel-shaped clamping cone (31), an outer cone (39) on the clamping bolt head (38) resting in a planar manner on the clamping cone (31) and thus expanding the clamping sleeve (29) as the clamping bolt (35) is screwed in.

8. An arrangement according to any one of claims 4 to 7, **characterised in that** the clamping sleeve (29) has a slot in the axial direction (32).

9. An arrangement comprising:
- an energy storage module (1), comprising a plurality of storage cells (10) which are braced between two end plates (17) by tie rods (18), wherein the end plates (17) have a respective cavity,
- a module carrier (19), especially a vehicle body, and
- a locking device (41), configured to fasten the energy storage module (1) to the module carrier (19),
- wherein the locking device (41) comprises a mounting device (42) with a plurality of locking lugs (43) arranged in tandem, and a locking tongue (44) which engages behind one of the locking lugs (43), wherein a first end (45) of the mounting device (42) is rigidly connected to the module carrier (19) and the energy storage module (1) can be attached to the other end of the mounting device (42) such that the mounting device (42) projects into the cavity in the end plate (17) and can be locked and unlocked by means of locking lug (43) and locking tongue (44).

10. An arrangement according to claim 9, **characterised in that** the locking tongue (44) is configured resiliently and/or is spring-loaded for locking independently behind the locking lug (43).

11. An arrangement according to either claim 9 or claim 10, **characterised in that** the mounting device (42) comprises a plurality of locking lugs (43) which are arranged in parallel.

12. An arrangement according to any one of claims 1 to 8, **characterised in that** the energy storage module (1) is a power supply device, especially of a motor vehicle, comprising a plurality of storage cells (10) which are braced by tie rods (18) between two end plates (17).

## Revendications

1. Agencement (21) comprenant :
- un module accumulateur d'énergie (1), et
- un porte-module (19) en particulier une carrosserie de véhicule, **caractérisé par**
un boulon de blocage à billes (22) réalisé pour permettre la fixation du module accumulateur d'énergie (1) sur le porte-module (19), une première extrémité (23) du boulon de blocage à billes (22) étant reliée solidairement au porte-module (19) et, le module accumulateur d'énergie (1) pouvant être enfiché sur l'autre extrémité du boulon de blocage à billes (22) et pouvant être verrouillé et déverrouillé au moyen de billes (28) situées à la périphérie du boulon de blocage à bille (22), ou
la première extrémité (23) du boulon de blocage à billes (22) étant reliée solidairement au module accumulateur d'énergie (1) et le porte-module (19) pouvant être enfiché sur l'autre extrémité du boulon de blocage à billes (22) et pouvant être verrouillé et déverrouillé au moyen de billes (28) situées à la périphérie du boulon de blocage à billes (22),
une douille de serrage (29) étant installée sur le boulon de blocage à billes (22), entre la première extrémité (23) et les billes (28) pour permettre la transmission des forces entre les billes (28) et l'élément enfiché, c'est-à-dire le module accumulateur d'énergie (1) ou le porte-module (19).

2. Agencement conforme à la revendication 1,
**caractérisé en ce que**
la douille de serrage (29) comporte à son extrémité frontale tournée vers les billes (28) un cône de serrage (31) en forme d'entonnoir constituant une surface d'appui pour les billes (28).

3. Agencement conforme à l'une des revendications 1 ou 2,
**caractérisé en ce que**
la douille de serrage (29) comprend au moins un ressort à disque (30) et/ou au moins un élément élastique pour permettre la compensation du jeu en direction axiale (32).

4. Agencement comprenant :
un module accumulateur d'énergie (1),
un porte-module (19) en particulier une carrosserie de véhicule, et
un dispositif de serrage (34) réalisé pour permettre de fixer le module accumulateur d'énergie (1) sur le porte-module (19),
le dispositif de serrage (34) comprenant un boulon de serrage (35),
**caractérisé en ce que**
le dispositif de serrage (34) comprend en outre une douille de serrage (29) élargie par le boulon de serrage (35).

5. Agencement conforme à la revendication 4,
**caractérisé en ce qu'**
une première extrémité (36) du boulon de serrage (35) est vissée dans le porte-module (19), et le module accumulateur d'énergie (1) peut être enfiché sur l'autre extrémité du boulon de serrage (35) et être bloqué par élargissement de la douille de serrage (29), ou
une première extrémité (36) du boulon de serrage (35) est vissée dans le module accumulateur d'énergie (1) et le porte-module (19) peut être enfiché sur l'autre extrémité du boulon de serrage (35) et être bloqué par élargissement de la douille de serrage (29).

6. Agencement conforme à la revendication 5,
**caractérisé en ce que**
la douille de serrage (29) est installée sur le boulon de serrage (35) entre la première extrémité (36) et la tête (38) du boulon de serrage pour permettre la transmission des forces entre la tête du boulon de serrage (38) et l'élément enfiché, c'est-à-dire le module accumulateur d'énergie (1) ou le porte-module (19).

7. Agencement conforme à la revendication 6,
**caractérisé en ce que**
la face frontale de la douille de serrage (29) tournée vers la tête du boulon de serrage (38) comprend un cône de serrage (31) en forme d'entonnoir, et un cône externe (39) situé sur la tête (38) du boulon de serrage s'applique à plat sur le cône de serrage (31) et élargit ainsi la douille de serrage (29) lors du vissage du boulon de serrage (35).

8. Agencement conforme à l'une des revendications 4 à 7,
**caractérisé en ce que**
la douille de serrage (29) comporte une fente en direction axiale (32).

9. Agencement comprenant :
- un module accumulateur d'énergie (1) constitué de plusieurs cellules d'accumulation d'énergie (10) qui sont serrées entre deux plaques d'extrémité (17) par l'intermédiaire de tirants (18), les plaques d'extrémité (17) comprenant chacune une cavité,
- un porte-module (19) en particulier une carrosserie de véhicule, et
- un dispositif d'encliquetage (41) réalisé pour permettre la fixation du module accumulateur d'énergie (1) sur le porte-module (19),
- le dispositif d'encliquetage (41) comprenant un système de fixation (42) comprenant plusieurs becs d'encliquetage (43) installés les uns derrière les autres et une languette d'encliquetage (44) venant en prise à l'arrière de l'un des becs d'encliquetage (43), une première extrémité (45) du système de fixation (42) étant reliée solidairement au porte-module (19) et le module accumulateur d'énergie (1) pouvant être enfiché sur l'autre extrémité du système de fixation (42) de sorte que le système de fixation (42) pénètre dans la cavité de la plaque d'extrémité (17) et puisse être verrouillé et déverrouillé au moyen des becs de verrouillage (43) et des languettes d'encliquetage (44).

10. Agencement conforme à la revendication 9,
**caractérisé en ce que**
la languette d'encliquetage (44) est réalisée élastiquement et/ou est élastiquement précontrainte pour permettre son encliquetage automatique à l'arrière des becs d'encliquetage (43).

11. Agencement conforme à l'une des revendications 9 et 10, **caractérisé en ce que**
le système de fixation (42) comprend plusieurs becs d'encliquetage (43) parallèles.

12. Agencement conforme à l'une des revendications 1 à 8,
**caractérisé en ce que**
le module accumulateur d'énergie (1) est un dispositif d'alimentation en tension en particulier d'un véhicule automobile constitué de plusieurs cellules d'accumulation (10) qui sont serrées par des tirants (18) entre deux plaques d'extrémité (17).
